# EUROPEAN PATENT APPLICATION

(11) **EP 4 345 663 A1**
(43) Date of publication of application: **03.04.2024**
(21) Application number: 22198484.2
(22) Date of filing: 28.09.2022
(51) Int. Cl.: G06F 21/40, H04W 4/02

(54) **USER DEVICE AUTHENTICATION**

(71) Applicant: British Telecommunications public limited company, London E1 8EE (GB)
(72) Inventor: SMITH-CREASEY, Max, London E1 8EE (GB)
(74) Representative: British Telecommunications public limited company Intellectual Property Department

(57) **Abstract**

Following a determination that a first user authentication procedure performed by a first user device to attempt to authenticate a first user for access to functionality of the first user device has failed, a second user device trusted by the first user device obtains input by a second user to a user input device associated with the second user device. That input comprises a selection of one from authentication and rejection of the first user. Responsive thereto, the second user device transmits an authentication response based on the selection.

## Description

### FIELD

The present disclosure relates to authentication of user devices.

More specifically, aspects relate to data processing systems including user devices, systems comprising such data processing systems, computer-implemented authentication methods, data processing systems configured to perform such methods, computer programs comprising instructions which, when executed by a computer, cause the computer to carry out such methods, computer-readable data carriers having such programs stored thereon, and data carrier signals carrying such programs.

### BACKGROUND

Authentication methods for user devices have become increasingly sophisticated and secure in recent years, in particular as biometric authentication based on for example fingerprint and iris scans, facial recognition, and vocal signature matching have become more widespread. However, when biometric authentication fails due to false rejection (e.g. face not recognised after a restyle or fingerprint not recognised due to the finger presented being wet), personal devices usually fall back to an alternative authentication option (e.g. password or personal identification number, PIN). Since the alternative is often less secure, imposters can exploit this approach.

What is needed is an alternative approach to handling authentication failure due to false rejection.

### SUMMARY

According to a first aspect, there is provided a second user device comprising:
an interface configured to, following a determination that a first user authentication procedure performed by a first user device, which trusts the second user device, to attempt to authenticate a first user for access to functionality of the first user device has failed, obtain input by a second user to a user input device associated with the second user device, that input comprising selection of one from authentication and rejection of the first user; and
a transmitter configured to, in response to the interface obtaining the input from the second user, transmit an authentication response based on the selection.

According to a second aspect, there is provided a data processing system comprising:
a receiver configured to, following a determination that a first user authentication procedure performed by a first user device to attempt to authenticate a first user for access to functionality of the first user device has failed, receive an indication of an authentication response issued by a trusted second user device, the authentication response being based on input by a second user to a user input device associated with the second user device, that input comprising a selection of one from authentication and rejection of the first user; and
a processor configured to, in response to the receiver receiving the indication of the authentication response, authenticate or reject the first user for access to the functionality of the first user device in dependence on the selection by the second user, wherein the first user is rejected when the second user selected rejection of the first user.

According to a third aspect, there is provided a data processing system comprising:
a transmitter configured to, in response to a determination that a first user authentication procedure performed by a first user device to attempt to authenticate a first user for access to functionality of the first user device has failed, transmit an authentication request to a trusted second user device to request:
selection by a second user of one from authentication and rejection of the first user, by input to a user input device associated with the second user device; and
transmission by the second user device of an authentication response based on that selection.

According to a fourth aspect, there is provided a system comprising the second user device of the first aspect and one or both of the data processing system of the second aspect and the data processing system of the third aspect.

According to a fifth aspect, there is provided a computer-implemented authentication method comprising:
following a determination that a first user authentication procedure performed by a first user device to attempt to authenticate a first user for access to functionality of the first user device has failed, a second user device trusted by the first user device:
obtaining input by a second user to a user input device associated with the second user device, that input comprising a selection of one from authentication and rejection of the first user; and
responsive thereto, transmitting an authentication response based on the selection.

The computer-implemented authentication method can further comprise receiving an authentication request requesting the authentication response.

The computer-implemented authentication method can further comprise, in response to receiving the authentication request, causing a user output device associated with the second user device to prompt the second user to make the selection.

According to a sixth aspect, there is provided a computer-implemented authentication method comprising:
following a determination that a first user authentication procedure performed by a first user device to attempt to authenticate a first user for access to functionality of the first user device has failed, obtaining an authentication response from a trusted second user device, the authentication response being based on input by a second user to a user input device associated with the second user device, that input comprising a selection of one from authentication and rejection of the first user; and
responsive thereto, authenticating or rejecting the first user for access to the functionality of the first user device in dependence on the selection by the second user, wherein the first user is rejected when the second user selected rejection of the first user.

The computer-implemented authentication method can further comprise causing transmission of an authentication request to the second user device to request the authentication response.

According to a seventh aspect, there is provided a computer-implemented authentication method comprising:
in response to a determination that a first user authentication procedure performed by a first user device to attempt to authenticate a first user for access to functionality of the first user device has failed, causing transmission of an authentication request to a trusted second user device to request:
selection by a second user of one from authentication and rejection of the first user, by input to a user input device associated with the second user device; and
transmission by the second user device of an authentication response based on said selection.

The computer-implemented authentication method can further comprise making the determination that the first user authentication procedure performed by the first user device to attempt to authenticate the first user has failed.

The computer-implemented authentication method can further comprise transmitting the authentication request.

The computer-implemented authentication method can further comprise obtaining the authentication response.

The computer-implemented authentication method can further comprise authenticating or rejecting the first user for access to the functionality of the first user device in dependence on the selection by the second user, wherein the first user is rejected when the second user selected rejection of the first user.

The computer-implemented authentication method can further comprise providing or denying the first user access to the functionality of the first user device in dependence on the authentication response, wherein the first user is denied access to the functionality when the authentication response indicates that the second user selected rejection of the first user.

The computer-implemented authentication method can further comprise making a determination that the second user device is trusted.

The computer-implemented authentication method can further comprise making a determination that the second user device is local to the first user device.

The computer-implemented authentication method can further comprise making a determination that the second user is authorised for authentication of the first user according to a second user authentication procedure, which is optionally a biometric and/or continuous authentication procedure.

The computer-implemented authentication method can further comprise:
obtaining a standard to which the first user was authenticated by the first user authentication procedure;
obtaining a standard to which the second user was authenticated by the second user authentication procedure; and
making a determination that the standard to which the second user was authenticated by the second user authentication procedure is higher than the standard to which the first user was authenticated by the first user authentication procedure.

The standard to which the first user was authenticated by the first user authentication procedure can depend on a first authentication strength associated with the first user authentication procedure; and
the standard to which the second user was authenticated by the second user authentication procedure can depend on a second authentication strength associated with the second user authentication procedure.

The standard to which the first user was authenticated by the first user authentication procedure can depend on a first authentication confidence obtained via the first user authentication procedure, the first authentication confidence indicating a level of confidence that the first user was authorised for access to the functionality of the first user device; and
the standard to which the second user was authenticated by the second user authentication procedure can depend on a second authentication confidence obtained via the second user authentication procedure, the second authentication confidence indicating a level of confidence that the second user was authorised for authentication of the first user.

The computer-implemented authentication method can further comprise selecting the second user device from a plurality of candidate devices.

Selection of the second user device can be based on a determination that the second user device comprises both of:
an interface configured to obtain the input from the second user selecting one from authentication and rejection of the first user; and
a transmitter configured to transmit the authentication response.

Selection of the second user device can be based on the determination that the second user device is trusted.

Selection of the second user device can be based on the determination that the second user device is local to the first user device.

Selection of the second user device can be based on the determination that the second user is authorised for authentication of the first user according to the second user authentication procedure.

Selection of the second user device can be based on the determination that the standard to which the second user was authenticated by the second user authentication procedure is higher than the standard to which the first user was authenticated by the first user authentication procedure.

Selection of the second user device can be based on a/the standard to which the second user was authenticated by the second user authentication procedure.

The standard to which the second user was authenticated by the second user authentication procedure can depend on a second authentication strength associated with the second user authentication procedure.

The standard to which the second user was authenticated by the second user authentication procedure can depend on a second authentication confidence obtained via the second user authentication procedure, the second authentication confidence indicating a level of confidence that the second user was authorised for authentication of the first user.

Selection of the second user device can be based on proximity of the second user device to the first user device.

The computer-implemented authentication method can further comprise determining proximity of the second user device to the first user device.

The computer-implemented authentication method can further comprise performing the first user authentication procedure, which is optionally a biometric and/or continuous authentication procedure.

The first and second users can be different individuals.

The authentication response can be transmitted over a direct communication link.

The authentication request can be transmitted over a direct communication link.

The first user can be rejected when a time elapsed between the determination that the first user authentication procedure has failed and the second user making the selection of one from authentication and rejection of the first user exceeds a predetermined maximum delay.

According to an eighth aspect, there is provided a data processing system configured to perform the method of any of the fifth to seventh aspects.

According to a ninth aspect, there is provided a computer program comprising instructions which, when the program is executed by a computer, cause the computer to carry out the method of any of the fifth to seventh aspects.

According to a tenth aspect, there is provided a computer-readable data carrier having stored thereon the computer program of the ninth aspect.

According to an eleventh aspect, there is provided a data carrier signal carrying the computer program of the ninth aspect.

### BRIEF DESCRIPTION OF THE FIGURES

Aspects of the present disclosure will now be described by way of example with reference to the accompanying figures. In the figures:
Figure 1 schematically illustrates an example system;
Figures 2A, 2B, 2C, 3, and 4 are flowcharts illustrating example methods; and
Figure 5 schematically illustrates an example data processing system.

### DETAILED DESCRIPTION

A human-in-the-loop fall-back mechanism is proposed in which, following authentication failure on a first user device, user input on a second, trusted, device is used to verify that the user of the first device is who they claim to be. The second device might belong to the same user as the first, or to someone they know. For example, in an office environment if an employee's attempt to log in to their device fails then verification of their identity can be provided by their line manager, if they are nearby with their own device.

A policy can require that the second device authenticates its user. That authentication may be required to be to a standard higher than a standard to which the first user was authenticated, where authentication standard can refer to one or a combination of: (i) an authentication strength associated with an authentication method; and (ii) an authentication confidence generated by an authentication procedure.

If multiple trusted devices are available to act as the second device then one or both of authentication standard and proximity can be used to determine which one acts as the verifier.

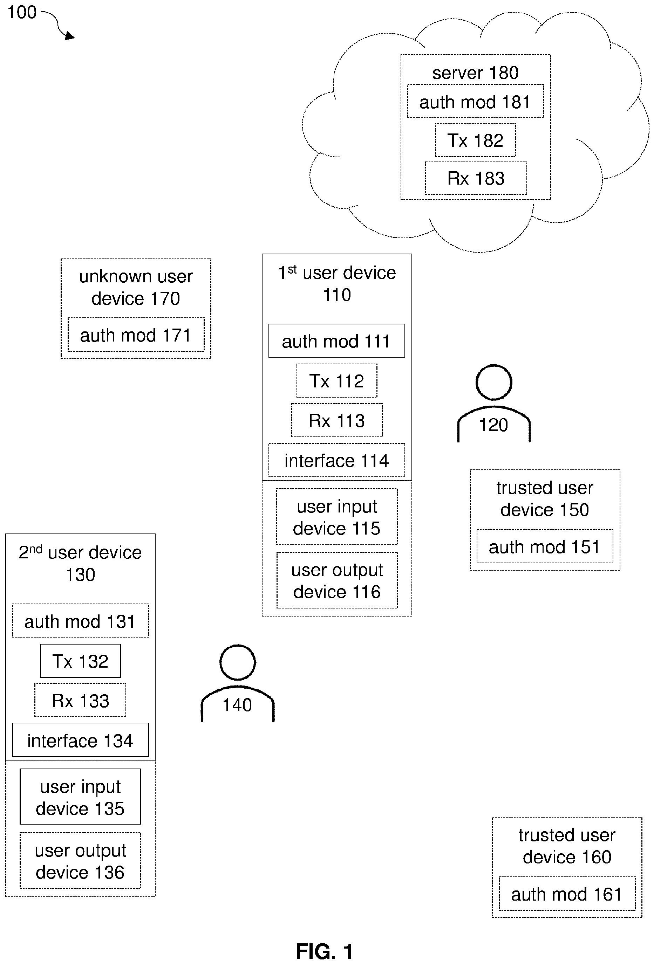

Figure 1 illustrates an example system 100 comprising a first user device 110 operated by a first user 120 and a second user device 130 operated by a second user 140. The first and second users 120, 140 can be the same or different individuals.

The first user device 110 comprises a first user device authentication module 111 configured to perform a first user authentication procedure to attempt to authenticate the first user 120 for access to functionality of the first user device 110. That functionality can be generic; e.g. the first user authentication procedure can be enacted to enable unlocking of the first user device 110. Alternatively, that functionality can be specific, e.g. to permit access to a particular application, or to specific functionality within an application.

In response to failure of the first user authentication procedure, the second user 140 is enlisted to 'vouch for' the first user 120 by providing input to a user input device 135 associated with the second user device 130 selecting one from authentication and rejection of the first user 120. The user input device 135 can for example be a touchscreen or a microphone. The second user device 130 comprises an interface 134 configured to obtain that input from the second user 140.

The user input device 135 can be comprised in the second user device 130 itself, in which case the interface 134 can for example be an electronic communication bus. Alternatively, the user input device 135 can be comprised in a peripheral device in communication with the second user device 130, in which case the interface 134 can for example be a wired peripheral device interface such as a universal serial bus (USB) port or a wireless peripheral device interface such as a Bluetooth^{™} transceiver. The second user device 130 can also communicate with a user output device 136 via the interface 134 or another interface. The first user device 110 can similarly comprise one or more interfaces 114 configured to interface with one or both of a user input device 115 and a user output device 116.

If the first and second users 120, 140 are the same individual, then that person may know to provide the required input to the second user device 130, for example in response to a notification output by a user output device 116 associated with the first user device 110 that the first user authentication procedure has failed. Alternatively, such a notification can provide the first user 120 with instructions to provide the input to the second user device 130. Similarly, if the first and second users are different individuals then the first user 120 may know to ask the second user 140 for their selection in response to receiving a notification output by a user output device 116 associated with the first user device 110 that the first user authentication procedure has failed, or such a notification can provide the first user 120 with instructions to do so.

Alternatively, the first user device 110 can comprise a transmitter 112 configured to, in response to failure of the first user authentication procedure, transmit an authentication request to the second user device 130, which can receive such an authentication request with a receiver 133. This can occur automatically or in response to some prompted or unprompted input of the first user 120 to a user input device 115 associated with the first user device 110. In response to receipt of such an authentication request by a receiver 133 of the second user device 130, a user output device 136 associated with the second user device 130, such as a display screen or a speaker, can prompt the second user 140 to select one from authentication and rejection of the first user 120 using the user input device 135.

In some implementations, the first user device 110 can communicate with another data processing device, such as a server 180, which can perform some of the functions described above with respect to the first user device 110. In this way, a data processing system is formed comprising the first user device 110 and the server 180. For example, if the first user device 110 comprises a transmitter 112 and the server 180 comprises a receiver 183 then the first user device 110 can transmit raw or partially processed authentication data to the server 180 for (further) processing by a server authentication module 181. For example, a user input device 115 associated with the first user device 110 can collect authentication data (e.g. a fingerprint scan) from the first user 120 and the transmitter 112 can transmit that authentication data to the server 180, where it is received by the receiver 183. The server authentication module 181 can then compare the received authentication data to a user profile stored on or otherwise accessible to the server 180 to determine the outcome of the first user authentication procedure. The transmitter 182 can then communicate that outcome to the first user device 110. Alternatively, if the second user device 130 is equipped with a receiver 133 then the transmitter 182 of the server 180 can transmit an authentication request directly to it.

The second user device 130 comprises a transmitter 132 configured to, in response to the interface 134 obtaining the input from the second user 140, transmit an authentication response based on that input, for example to the first user device 110, the server 180 or another data processing device configured to communicate with both the first and second user devices 110, 130. The data processing device which receives the authentication response can either pass it on to another data processing device for processing, or can itself authenticate or reject the first user 120 for access to the requested functionality of the first user device 110 in dependence on the selection by the second user 140. The first user 120 is rejected when the second user 140 selected rejection of the first user. The first user 120 can be authenticated when the second user 140 selected authentication of the first user 120 (though this may not always be the case, for example if some other rejection criterion is present, such as detection of suspicious behaviour by the user 120).

The second user device 130 can further comprise a second user device authentication module 131 configured to authenticate the second user 140, for example by biometric and/or continuous authentication. This can be done prior to transmission of the authentication response and the result of the second user authentication procedure optionally comprised in the authentication response or separately communicated to the data processing system which is to authenticate or reject the first user 120 based on the authentication response.

The data processing system which is to authenticate or reject the first user based on the authentication response can be further configured to determine that the second user 140 is authenticated by a second user authentication procedure to a higher standard than the first user 120 was authenticated by the first user authentication procedure. The respective authentication standard can depend on an authentication strength associated with the respective authentication procedure. Authentication strength can for example be a measure of the likelihood of authentication of an unauthorised user occurring. For example, a random guess of a four-digit PIN is correct approximately 1 in 10,000 times, while facial recognition can incorrectly identify an unauthorised user as authorised approximately 1 in 1,000,000 times, so an authentication method solely based on entry of a four-digit PIN has a lower authentication strength than an authentication method solely based on facial recognition, by a factor of approximately 100. Alternatively or additionally, the respective authentication standard can depend on an authentication confidence obtained via the respective authentication procedure, for example a degree of matching to a user profile determined via biometric and/or continuous authentication techniques.

Biometrics are measurable, distinctive characteristics of a human which can be used to label and describe individuals. Individuals can therefore be identified using one, or a combination, of their biometrics. Biometrics include physiological characteristics and behavioural characteristics. Biometric measurements on which authentication can be based can for example comprise one or more of:
- facial images;
- pulse measurements;
- gait measurements;
- breathing pattern measurements;
- chemical signature measurements (e.g. from breath and/or perspiration);
- voice recordings;
- handwriting scans;
- handling signature measurements (e.g. one or more of orientation, direction and/or speed and/or acceleration of translational and/or rotational motion, holding pressure, frequency of interaction and/or changes in and/or patterns of changes in one or more of these);
- user interface interaction signature measurements (e.g. characteristic ways of one or more of typing, pressing buttons, interacting with a touch sensitive or gesture control device and viewing a display, for example determined through one or more of: force and pressure on a tactile interface; speed, rhythm, frequency, style and duration of interaction with a tactile or gesture-based interface; and visual tracking of a display);
- linguistic analysis measurements (e.g. from free text type and/or voice recordings); and
- device readings (e.g. processor and/or memory and/or application usage and/or settings).

In contrast to most traditional knowledge or possession-based authentication techniques (such as recall of a password or presentation of a certificate), biometric authentication does not typically directly produce a binary (authenticated/not authenticated) result. Instead a degree of matching to a pre-stored biometric profile is generally determined, for example expressed as a percentage confidence that the current user is an authorised user. Determination of whether such an authentication procedure has passed or failed can then comprise comparing such a confidence score to a predetermined threshold. Such a threshold can be calibrated for individual authorised users to allow for different individuals varying their behaviour to different extents and any physiological differences between individuals which may result in differing degrees of variation of biometrics over time.

Continuous authentication refers to authentication which takes place on an ongoing basis. This is in contrast to traditional authentication, which is prompted by a specific external stimulus indicating a request for functionality requiring authentication. (In the traditional case, the request for functionality could be specific, for example requesting access to a protected file, or more general, for example requesting log-in to a device which then enables multiple functions of that device.) Continuous authentication is based on measurements obtained passively, i.e. without the user being required to knowingly perform any particular prompted or remembered action.

Measurements to achieve continuous authentication can be taken by sampling one or more continuous sensor outputs and/or by triggering one or more sensors as required. Measurements can be taken continually; i.e. one after another, as quickly as the measurement apparatus allows. Alternatively, measurements can be taken on a routine basis. For example, a measurement or series of measurements can accompany any action or any of a class of actions (as opposed to a specific action) implemented on or by the device, e.g. handling of the device and/or use of any user input device comprised in the device and/or receipt or transmission of a communication by the device. Measurements can alternatively be taken on a particular temporal basis, for example a regular (e.g. periodic) basis, according to some other temporal pattern or randomly triggered (e.g. according to a stochastic variable).

Continuous authentication schemes often (but do not exclusively) comprise biometric authentication. Both biometric and continuous authentication schemes can make use of machine learning techniques such as artificial neural networks (ANNs). In some biometric and/or continuous authentication schemes authentication scores based on multiple authentication factors are fused to produce an overall confidence level, in some cases with different factors being weighted differently (e.g. according to their typical accuracy).

Authentication standard can for example be determined as a combination of authentication strength and authentication confidence, for example by multiplying a percentage authentication confidence by an authentication strength.

An authentication module of the data processing system which is to authenticate or reject the first user 120 based on the authentication response, e.g. the first user device authentication module 111 or the server authentication module 181, can be further configured to select the second user device 130 from a plurality of trusted user devices 130, 150, 160 in dependence on an authentication strength associated with a user device authentication module 131, 151, 161 of the trusted user device 130, 150, 160, or an authentication standard to which respective current users of the trusted devices 130, 150, 160 are authenticated. For example, the selected trusted user device 130 could be the trusted user device of the plurality 130, 150, 160 capable of the highest strength authentication, the user device of the plurality whose respective current user is authenticated with the highest authentication confidence, or the user device of the plurality whose respective current user is authenticated to the highest authentication standard. Authentication strengths associated with the user device authentication modules 131, 151, 161 of the trusted user devices 130, 150, 160 can be stored in a location accessible to the first user device authentication module 111 or server authentication module 181 in advance. Authentication confidences with which current users of the trusted user device 130, 150, 160 are authenticated, or authentication standards derived therefrom, can be communicated to the data processing system which is to perform the selection of the second user device at or close to the time they are needed to inform that selection, for example in response to a request from the data processing system performing the selection, or via periodic reporting thereto.

A policy can require that the second user device 130 be local to the first user device 110 for its authentication response to be considered reliable. That is, the first user could be rejected when the second user device 130 is determined not to be local to the first user device 110. Locality can refer to one or more of:
- physical proximity, e.g. the first and second user devices being within a predetermined radius of one another;
- regional proximity, e.g. the first and second user devices both being within a predefined locality such as a geofenced area, a building or a floor of a building;
- network proximity, e.g. the first and second user devices both being connected to the same wired or wireless local area network (LAN), to the same branch of a network or to the same network access point; and
- communicative proximity, e.g. the first and second user device being capable of communication with one another directly, via no more than a predetermined maximum number of intermediate nodes, or within a predetermined maximum time period.

Determining proximity between the first and second user devices can comprise obtaining location data for them, for example from a database and/or using global navigation satellite system (GNSS) and/or network configuration signals. Alternatively, proximity between the first and second user devices can be determined via communication between them. For example the received signal strength of a radio signal transmitted by one of the first and second user devices and received by the other can indicate their physical proximity, while the time taken to respond to a 'ping' signal (or indeed an authentication request) can indicate communicative proximity and, in the case of communication over a direct wireless link, physical proximity.

The first user device authentication module 111 or server authentication module 181 can be further configured to select the second user device 130 from a plurality of trusted user devices 130, 150, 160 in dependence on proximity of the second user device 130 to the first user device 110. For example, the selected second user device 130 could be the closest trusted user device of the plurality 130, 150, 160 to the first user device 110.

Selection of the second user device 130 from the plurality of trusted user devices 130, 150, 160 can be based on a combination of authentication standard and proximity. For example, each trusted user device 130, 150, 160 can be allocated an authentication standard score and a proximity score, which are combined to arrive at an overall score, with the selection being of the trusted user device having the highest overall score.

Figure 1 also shows an unknown user device 170, which can comprise an authentication module 171. This unknown user device 170 is not selected to provide fallback authentication, even if it is closer to the first user device 110 and/or has authenticated its current user to a higher authentication standard than any of the trusted user devices 130, 150, 160, since it is not trusted by the first user device 110. A policy can for example require that a user device meets one or more of the following criteria in order to be trusted by the first user device 110:
- presence on a list of trusted devices, for example via prior registration by the first user or another entity such as their employer;
- connection to a trusted network, for example a wired or wireless LAN to which the first user device is connected;
- possession of an authentication credential, for example stored on a subscriber identity module (SIM); and
- possession of a trusted characteristic, for example manufacturer or security software e.g. antivirus.

Communication between the first user device 110, the second user device 130 and any other data processing devices present such as the server 180, the trusted user devices 150, 160 and the unknown user device 170 can be over one or more wired or wireless communication links. For example, any communication between user devices and the server 180 (which can e.g. be a cloud server) can be via the Internet. Any communication between user devices can for example be over a direct wireless communication link such as Bluetooth^{™} or WiFi Direct, or over local wired links such as LAN cables.

In some implementations, a policy can require that the first user is rejected when a time elapsed between the determination that the first user authentication procedure has failed and the second user making the selection of one from authentication and rejection of the first user exceeds a predetermined maximum delay. Proxies can be used for one or both of the time the determination that the first user authentication procedure has failed and the time the second user makes their selection. Proxies for the time the determination that the first user authentication procedure has failed can for example include, without limitation:
- the time an authentication request is transmitted;
- the time a user notification informing the first user that the first user authentication procedure has failed is issued; and
- the time a user notification prompting the second user to make their selection is issued.
Proxies for the time the second user makes their selection can for example include, without limitation:
- the time the authentication response is transmitted; and
- the time the authentication response is received.

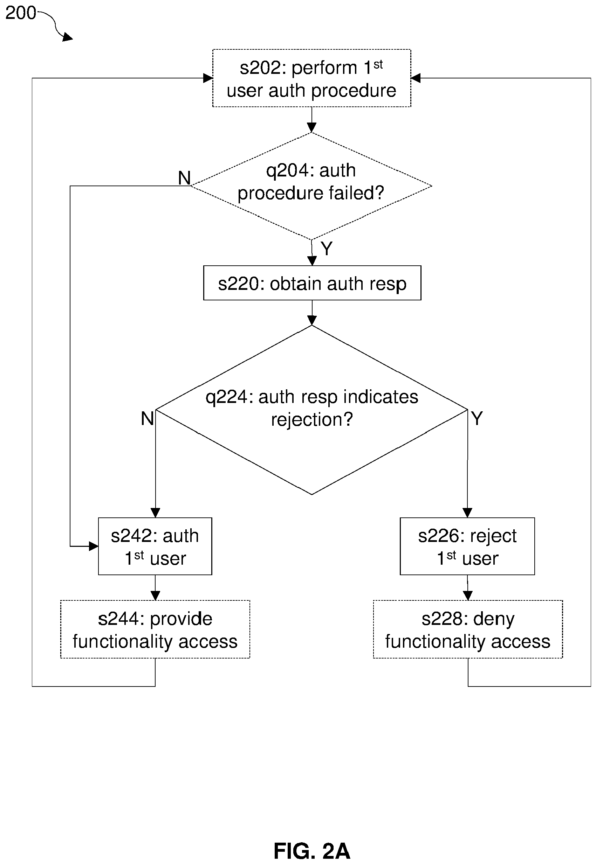

Figure 2A is a flowchart illustrating a computer-implemented authentication method 200. It can be performed by a first user device such as the first user device 110 of Figure 1, a third party such as the server 180 of Figure 1 or a distributed data processing system comprising the first user device and one or more such third parties. Following a determination that a first user authentication procedure performed by a first user device to attempt to authenticate a first user for access to functionality of the first user device has failed, an authentication response is obtained at step s220 from a trusted second user device. The authentication response is based on input by a second user to a user input device associated with the second user device, that input comprising a selection of one from authentication and rejection of the first user. In response to step s220, the first user is either authenticated for access to the functionality of the first user device at step s242, or rejected for access to the functionality of the first user device at step s226 in dependence on the selection by the second user, wherein the first user is rejected when the second user selected rejection of the first user, as tested by query q224.

Authorisation of the first user could for example result in providing access to the functionality of the first user device at step s244, e.g. by unlocking of the first user device and/or specific functionality associated with it. Rejection of the first user could for example result in denying access to the functionality of the first user device at step s228, e.g. by locking of the first user device, or refusal or limitation of functionality requested of it, and/or issuance of an unauthorised use alert, for example to an email address of the authorised user and/or to a server of an organisation with an interest in security of the first user device (e.g. the authorised user's employer). One or both authorisation at step s242 and rejection at step s226 can comprise communication of that result to the first user via a user output device associated with the first user device.

The method 200 can further comprise determining whether the first user authentication procedure performed by the first user device to attempt to authenticate the first user has failed at query q204. If so, the method 200 proceeds to step s220 to obtain the authentication response. If not, the method 200 proceeds directly to step s242 to authenticate the first user.

The method 200 can further comprise performing the first user authentication procedure, which can for example be a biometric and/or continuous authentication procedure, at step s202.

The method 200 can optionally be performed repeatedly, for example in a continuous loop, periodically, or in response to the first user requesting the functionality of the first user device (e.g. via a user input device associated with the first user device).

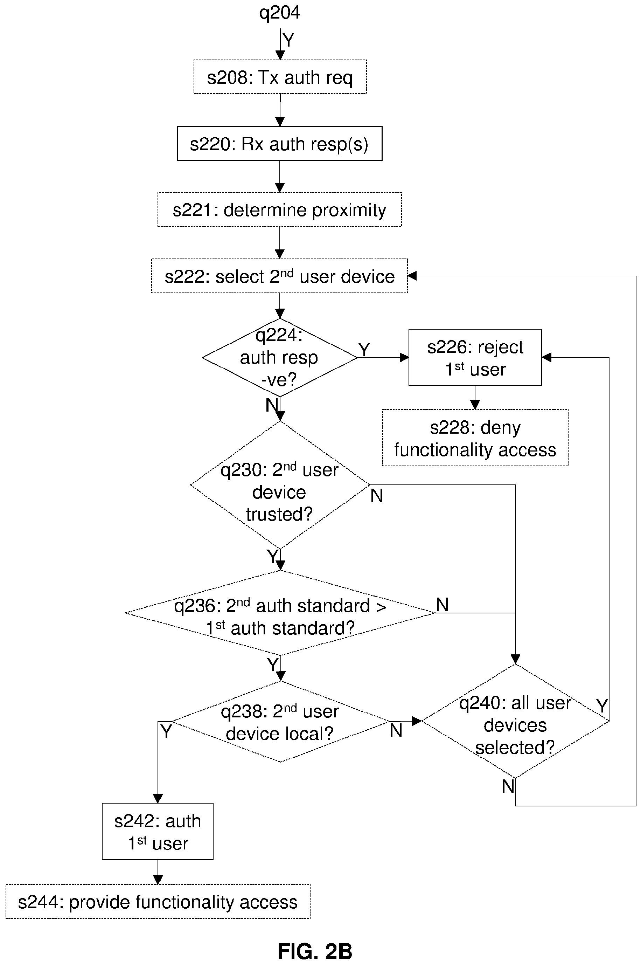

Figure 2B illustrates an example of how the method 200 of Figure 2A can be implemented following a determination that the first authentication procedure has failed at query q204, with like reference numerals indicating like elements of the method. According to this example, an authentication request transmitted at step s208 is directed to all user devices in range, for example via broadcast radio transmission. An authentication response is then received at step s220 before a determination is made at query q224 as to whether that response is negative. If so, the first user is rejected at step s226. If not, the method proceeds to query q230 where it is determined whether the user device from which the positive authentication response was received at step s220 is trusted. If so, the method can proceed to query q238 where it is determined whether the trusted user device from which the authentication response was received at step s220 is local to the first user device. This can for example be inferred from a delay between transmitting the authentication request at step s208 and receiving the authentication response at step s220. (Such an inference is likely to be more accurate if the authentication request and response are communicated over direct communication links.) In some implementations, the authentication response can be considered invalid if this delay exceeds a predetermined maximum. If query q238 is answered in the affirmative then the first user can be authenticated at step s242.

The proximity of the second user device to the first user device can be determined at step s221. Where both step s221 and query q238 are implemented, the determination of whether the second user device is local to the first at query q238 can be based on the proximity determined at step s221. Step s221 can be performed by inference from the delay between transmission of the authentication request at step s208 and receipt of the authentication response at step s220. Alternatively, step s221 can be based on location data associated with the first and second user devices, for example stored in a data structure accessible to the data processing system performing the method 200. If the second user device's location is fixed then that location can be stored together with an identifier of the second user device, and optionally other data such as an authentication strength associated with a second user device authentication module, in a data structure accessible to the data processing system performing the method 200. Alternatively, if the second user device is mobile then it can report its location, for example based on GNSS signalling, to the data processing system performing the method 200. Second user device location data can for example be reported periodically, reported in response to detection of movement of the second user device, or comprised in the authentication response. The first user device can establish locality of the second user device in order to answer query q238 by performing a radio scan, for example a Bluetooth^{™} scan, with any devices appearing in the scan results, or appearing with at least a minimum received signal strength, being considered local. (In this case it is convenient for the list of trusted user devices to index them by Bluetooth^{™} identifier.) Such a scan can also be used to infer proximity at step s221, e.g. from received signal strength or time taken to respond to a broadcast signal.

The method of Figure 2B can further comprise determining at query q236 whether a standard to which the second user was authenticated by a second user authentication procedure (which can for example be a biometric and/or continuous authentication procedure) is higher than a standard to which the first user was authenticated by the first user authentication procedure. If not, then the authentication response received from that second user is not relied upon for authentication of the first user. The standards to which the first and second users were authenticated by the respective first and second user authentication procedures can depend on one or both of: respective first and second authentication strengths associated with the first and second user authentication procedures; and respective first and second authentication confidences obtained via the first and second user authentication procedures. (The first authentication confidence can indicate a level of confidence that the first user was authorised for access to the functionality of the first user device. The second authentication confidence can indicate a level of confidence that the second user was authorised for authentication of the first user.)

If multiple authentication responses are received then step s222 can be implemented to select the second user device from a plurality of candidate user devices which responded to the authentication request. This can be done on any suitable basis, for example at random or based on one, or a combination of two or more, of the following factors:
- a preconfigured priority order (for example as established by the first user during a registration procedure);
- authentication response order, with earlier responses increasing the likelihood of selection (since earlier responses imply closer proximity);
- proximity to the first user device as determined at step s221, with closer proximity increasing the likelihood of selection; and
- authentication standard, with higher authentication standards increasing the likelihood of selection.

Any authentication responses received from untrusted devices can be discarded and an alternative second user device selected by, when query q230 is answered in the negative, implementing a query q240 as to whether all of the plurality of user devices have yet been selected. If not, then another, as yet unselected user device of the plurality is selected at another iteration of step s222. If so, then the first user is rejected at step s226. Similarly, any authentication responses received from user devices that did not authenticate their users to a higher standard than the first user device, or that are not local to the first user device, can be discarded and an alternative second user device selected by, when query q236 or query q238 respectively is answered in the negative, implementing query q240.

If both step s222 and one or more of queries q230, q236 and q238 are implemented, then the latter can be comprised in the former. That is, a candidate user device being trusted and/or having authenticated its user to a higher standard than the first user device, and/or being local to the first user device can be a necessary condition for selection of that candidate user device as the second user device whose authentication response is relied upon for determining whether or not to authenticate the first user.

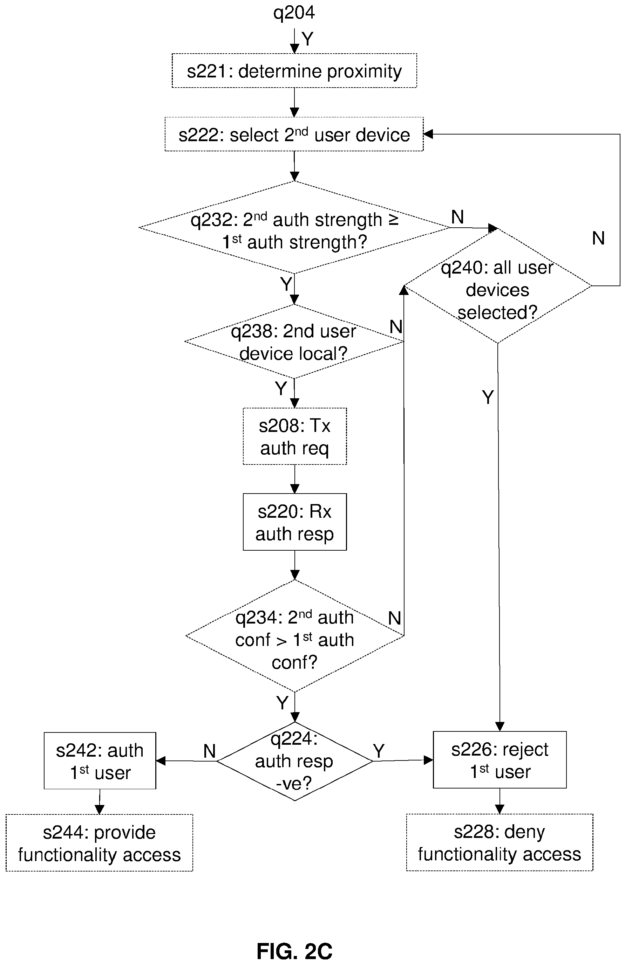

Figure 2C illustrates an alternative example of how the method 200 of Figure 2A can be implemented following a determination that the first authentication procedure has failed at query q204, with like reference numerals between Figures 2A, 2B and 2C indicating like elements of the method. According to this example, an authentication request is directed to a particular trusted user device, for example via unicast transmission.

In the method of Figure 2C, step s222 of selecting the second user device is performed before transmission of the authentication request at step s208. In this case selection of the second user device is from a pre-registered list of trusted user devices which have been determined to comprise both: (i) an interface configured to obtain the input from the second user selecting one from authentication and rejection of the first user; and (ii) a transmitter configured to transmit the authentication response.

Selection of the second user device at step s222 in the method of Figure 2C can be done on any suitable basis, for example at random or based on one, or a combination of two or more, of the following factors:
- a preconfigured priority order (for example as established by the first user during a registration procedure);
- proximity to the first user device as determined at step s221, with closer proximity increasing the likelihood of selection; and
- pre-registered authentication strength, with higher authentication strengths increasing the likelihood of selection.

Step s221 of determining proximity of each candidate user device to the first user device can for example be based on a Bluetooth^{™} scan used to identify devices local to the first user device. Bluetooth^{™} identifiers discovered in this way can be matched against a list of trusted user devices to determine which trusted user devices are local to the first user device. Bluetooth^{™} signal strengths obtained during the scan can indicate proximity of the devices discovered. Alternatively or additionally, all registered trusted user devices can regularly (e.g. periodically) report their location (e.g. based on GNSS data) for storage, e.g. on a server. The first user device can then either obtain the stored location data from the server in order to determine proximity of the trusted user devices itself, or report its own location to the server so that the server can select an appropriate candidate user device accordingly. This can for example be done periodically, and/or in response to a determination that the authentication procedure has failed being made at query q204.

Following selection of the second user device at step s222, a query q232 can be implemented to determine whether a second authentication strength associated with a second authentication procedure performed by the second user device to authenticate the second user for authentication of the first user is at least as high as a first authentication strength associated with the first authentication procedure. If not, an alternative second user device is selected via a loop back to step s222 through query q240, as described above in relation to Figure 2B. If so, the method proceeds to query q238.

If the second user device is determined to be local at query q238, for example based on step s221, then the authentication request is transmitted at step s208. If not, then an alternative second user device is selected via a loop back to step s222 through query q240, as described above.

Following receipt of the authentication response at step s220, query q234 can be implemented to determine whether a second authentication confidence with which the second user has been authenticated by the second authentication procedure is greater than a first authentication confidence with which the first user was authenticated by the first authentication procedure. (The second authentication confidence can for example be comprised in the authentication response received at step s220.) If not, then an alternative second user device is selected via a loop back to step s222 through query q240, as described above. If so, then the method proceeds to query 224 to determine whether the authentication response is negative, followed by steps s226 and s228 if it is, or steps s242 and s244 if it isn't.

If both step s222 and one or more of queries q232, q238 and q234 are implemented, then the latter can be comprised in the former. That is, a candidate user device being capable of authentication at least as strong as the first user device, and/or being local to the first user device, and/or having authenticated its user with greater confidence than the first user device can be a necessary condition for selection of that candidate user device as the second user device whose authentication response is relied upon for determining whether or not to authenticate the first user.

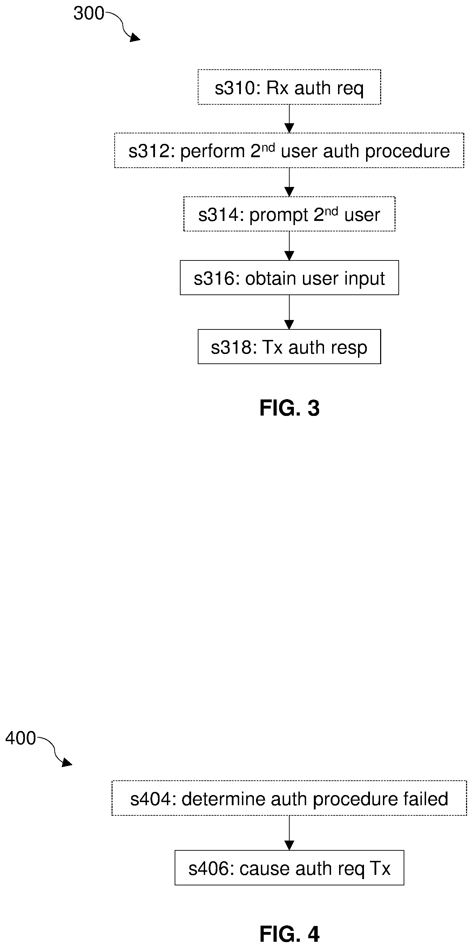

Figure 3 is a flowchart of a computer-implemented authentication method 300 which can be performed by a second user device such as the second user device 130 of Figure 1. The method 300 comprises, following a determination that a first user authentication procedure performed by a first user device, such as the first user device 110 of Figure 1, to attempt to authenticate a first user for access to functionality of the first user device has failed, the second user device (which is trusted by the first user device), obtaining input by a second user to a user input device associated with the second user device at step s316, that input comprising a selection of one from authentication and rejection of the first user. Responsive thereto, at step s318 the second user device transmits an authentication response based on the selection, for example to the first user device or another data processing device in communication with it, such as the server 180 of Figure 1.

The method 300 can further comprise receiving an authentication request requesting the authentication response at step s310. Responsive thereto, at step s314 the second user device can cause a user output device associated therewith to prompt the second user to make the selection.

The method 300 can further comprise, prior to transmitting the authentication response, authenticating the second user at step s312, for example by biometric and/or continuous authentication. This can for example occur in response to receiving the authentication request at step s310 or as a standard part of operation of the second user device, for example to unlock it for use.

Figure 4 is a flowchart of a computer-implemented authentication method 400. It can be performed by a first user device such as the first user device 110 of Figure 1, a third party such as the server 180 of Figure 1 or a distributed data processing system comprising the first user device and one or more such third parties. The method 400 comprises, in response to a determination that a first user authentication procedure performed by the first user device to attempt to authenticate a first user for access to functionality of the first user device has failed, at step s406 causing transmission of an authentication request to a trusted second user device to request: selection by a second user of one from authentication and rejection of the first user, by input to a user input device associated with the second user device; and transmission by the second user device of an authentication response based on that selection. Step s406 can be performed in response to a determination that the first user authentication procedure has failed at step s404.

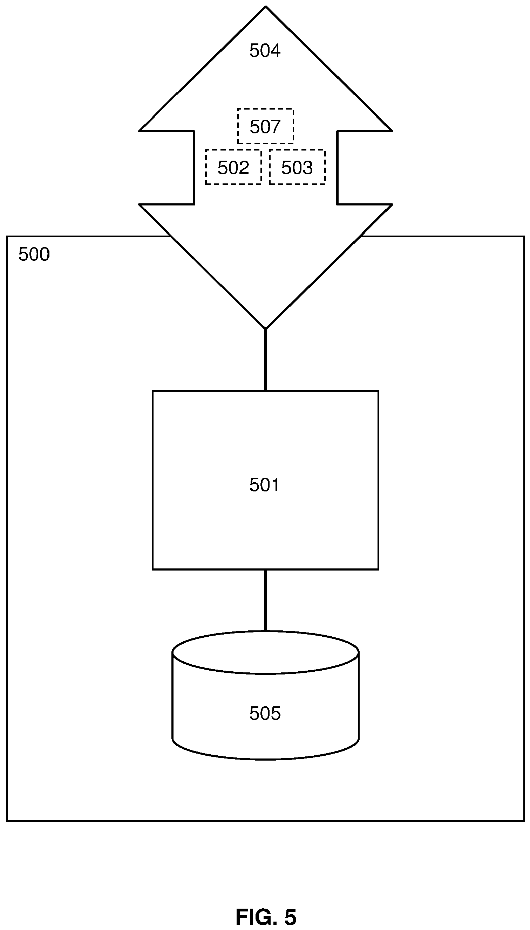

Figure 5 schematically illustrates an example data processing system (DPS) 500 capable of performing any of the methods 200 of Figures 2A, 2B or 2C, 300 of Figure 3 or 400 of Figure 4. It comprises a processor 501 operably coupled to both a memory 505 and an interface (I/O) 504.

The interface 504 can comprise a transmitter 502 configured to transmit messages. The transmitter 502 can comprise one or more wireless transmitter modules and/or one or more wired transmitter modules.

The interface 504 can comprise a receiver 503 configured to receive messages. The receiver 503 can comprise one or more wireless transmitter modules and/or one or more wired transmitter modules.

The memory 505 can optionally comprise computer program instructions which, when the program is executed by the processor 501, cause the data processing system 500 to carry out the method 200, the method 300, or the method 400. Alternatively or additionally, the interface 504 can optionally comprise a physical interface 507 configured to receive a data carrier having such instructions stored thereon. Alternatively or additionally, the receiver 503 can be configured to receive a data carrier signal carrying such instructions.

### INTERPRETATION NOTES

The preceding description is presented to enable any person skilled in the art to make and use the system and/or perform the method of the invention, and is provided in the context of a particular application. Various modifications to the disclosed examples will be readily apparent to those skilled in the art. It is intended that the specification be considered as exemplary only.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like.

Hardware modules or apparatuses described in this disclosure include, but are not limited to, application-specific integrated circuits (ASICs), field-programmable gate arrays (FPGAs), dedicated or shared processors, and/or other hardware modules or apparatuses.

User devices can include, without limitation, static user devices such as PCs and mobile user devices such as smartphones, tablets, laptops and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation: microphones, buttons, keypads, touchscreens, touchpads, trackballs, joysticks, mice, gesture control devices and brain control (e.g. electroencephalography, EEG) devices. User output devices can include, without limitation: speakers, buzzers, display screens, projectors, indicator lights, haptic feedback devices and refreshable braille displays. User interface devices can comprise one or more user input devices, one or more user output devices, or both.

## Claims

1. A second user device comprising:
an interface configured to, following a determination that a first user authentication procedure performed by a first user device, which trusts the second user device, to attempt to authenticate a first user for access to functionality of the first user device has failed, obtain input by a second user to a user input device associated with the second user device, that input comprising selection of one from authentication and rejection of the first user; and
a transmitter configured to, in response to the interface obtaining the input from the second user, transmit an authentication response based on the selection.

2. A data processing system comprising:
a receiver configured to, following a determination that a first user authentication procedure performed by a first user device to attempt to authenticate a first user for access to functionality of the first user device has failed, receive an indication of an authentication response issued by a trusted second user device, the authentication response being based on input by a second user to a user input device associated with the second user device, that input comprising a selection of one from authentication and rejection of the first user; and
a processor configured to, in response to the receiver receiving the indication of the authentication response, authenticate or reject the first user for access to the functionality of the first user device in dependence on the selection by the second user, wherein the first user is rejected when the second user selected rejection of the first user.

3. A data processing system comprising:
a transmitter configured to, in response to a determination that a first user authentication procedure performed by a first user device to attempt to authenticate a first user for access to functionality of the first user device has failed, transmit an authentication request to a trusted second user device to request:
selection by a second user of one from authentication and rejection of the first user, by input to a user input device associated with the second user device; and
transmission by the second user device of an authentication response based on that selection.

4. A system comprising the second user device of claim 1 and one or both of the data processing system of claim 2 and the data processing system of claim 3.

5. A computer-implemented authentication method comprising:
following a determination that a first user authentication procedure performed by a first user device to attempt to authenticate a first user for access to functionality of the first user device has failed, a second user device trusted by the first user device:
obtaining input by a second user to a user input device associated with the second user device, that input comprising a selection of one from authentication and rejection of the first user; and
responsive thereto, transmitting an authentication response based on the selection.

6. A computer-implemented authentication method comprising:
following a determination that a first user authentication procedure performed by a first user device to attempt to authenticate a first user for access to functionality of the first user device has failed, obtaining an authentication response from a trusted second user device, the authentication response being based on input by a second user to a user input device associated with the second user device, that input comprising a selection of one from authentication and rejection of the first user; and
responsive thereto, authenticating or rejecting the first user for access to the functionality of the first user device in dependence on the selection by the second user, wherein the first user is rejected when the second user selected rejection of the first user.

7. A computer-implemented authentication method comprising:
in response to a determination that a first user authentication procedure performed by a first user device to attempt to authenticate a first user for access to functionality of the first user device has failed, causing transmission of an authentication request to a trusted second user device to request:
selection by a second user of one from authentication and rejection of the first user, by input to a user input device associated with the second user device; and
transmission by the second user device of an authentication response based on said selection.

8. The computer-implemented authentication method of any of claims 5 to 7, further comprising making a determination that the second user device is local to the first user device.

9. The computer-implemented authentication method of any of claims 5 to 8, further comprising making a determination that the second user is authorised for authentication of the first user according to a second user authentication procedure, which is optionally a biometric and/or continuous authentication procedure.

10. The computer-implemented authentication method of claim 9, further comprising:
obtaining a standard to which the first user was authenticated by the first user authentication procedure;
obtaining a standard to which the second user was authenticated by the second user authentication procedure; and
making a determination that the standard to which the second user was authenticated by the second user authentication procedure is higher than the standard to which the first user was authenticated by the first user authentication procedure.

11. The computer-implemented authentication method of any of claims 6 to 10, further comprising selecting the second user device from a plurality of candidate devices.

12. A data processing system configured to perform the method of any of claims 5 to 11.

13. A computer program comprising instructions which, when the program is executed by a computer, cause the computer to carry out the method of any of claims 5 to 11.

14. A computer-readable data carrier having stored thereon the computer program of claim 13.

15. A data carrier signal carrying the computer program of claim 13.
